# EUROPEAN PATENT APPLICATION

(11) **EP 3 698 967 A1**
(43) Date of publication of application: **26.08.2020**
(21) Application number: 19158462.2
(22) Date of filing: 21.02.2019
(51) Int. Cl.: B32B 27/32, C08J 7/04, B65D 65/14, B65D 65/10

(54) **PACKAGING FILM**

(71) Applicant: Amcor Flexibles Sarrebourg, 57400 Sarrebourg (FR)
(72) Inventor: JACOB, Christophe, 67700 SAINT JEAN SAVERNE (FR); GRUAU, Bertrand, 57405 GUNTZVILLER (FR)
(74) Representative: Pronovem

(57) **Abstract**

The present invention is related to a storage-stable film intended to be reeled to a plurality of superposed film layers, said film comprising a sealing pattern at the edge of one side, perpendicular to the unwinding direction of the reeled film, said sealing pattern having the shape of a continuous or interrupted V-shaped or U-shaped strip, to reduce or avoid blocking while unwinding the reeled film, said film being characterized in that the unwinding force of the reeled film, after storage at 40°C during 48 hours, is at least 10% less compared to the unwinding force of a reeled film wherein the film comprises a continuous straight line-shaped strip sealing pattern, perpendicular to the unwinding direction of the reeled film and covering the same rectilinear distance as the V- or U-shaped strip.

The present invention is also related to a multilayer packaging film for rigid or semi-rigid blocks comprising said V-shaped or U-shaped sealing pattern.

## Description

### Field of the Invention

The present invention relates to storage-stable films, in particular to storage-stable packaging films.

### State of the Art

Films in general are reeled to a plurality of superposed film layers, as an intermediate step between their production and use. When they comprise sealable patterns, said films often show shortcomings of storage stability which translate into problems while unwinding the reel, usually due to (blocking) the superposed films sticking together at least to a certain extent.

A significant part of these reeled films is represented by packaging films.

Packaging films are already the subject of a number of patents and patent applications.

DE 199 48 286 discloses a plastic foil for packaging cube-shaped products, said plastic foil consisting of polyolefine, preferably polyethylene or polypropylene.

WO 01/25109 discloses a plastic foil for packaging cube-shaped products, comprising polyolefin base layer with a metallization layer and a heat-sealable layer on one side and a printing layer and a protective lacquer on the other side.

EP 0 870 695 B1 discloses a film for packages of rigid or semi-rigid blocks comprising a polyolefin-based film, the outer face of said film comprising a cold seal layer forming located patches, the inner face of said film comprising a non-stick layer, located with respect to the located patches of cold seal layer.

EP 0 990 596 B1 discloses a film for packages of rigid or semi-rigid blocks comprising a polyolefin-based film, the outer face of said film comprising a low-temperature heat sealing product forming marked areas, the inner layer of said film comprising an internal layer potentially sensitive to adhesion.

OA 12411 discloses a plastic film for packaging three-dimensional objects such as soup cubes comprising a base film of polyolefin or polyethylene terephthalate, on one side of which a metallization layer, a printing layer and a pattern of sealing lacquer, that seals at raised temperature, is provided, and wherein the areas of the printing to which the sealing lacquer is not applied, are provided with an over-lacquer that is pattern coated.

EP 1 574 329 discloses a packaging film based on a plastic material film for packaging of cuboidal food products, comprising:
- a barrier coating,
- optionally a first protective lacquer coating on the barrier coating,
- a printing on the barrier coating or on the first protective lacquer coating,
- a second protective lacquer coating and, at predetermined positions, a heat-sealable coating on the printing, and
- a cold-sealable coating on the printing, on the second protective lacquer coating or at predetermined positions on the heat-sealable coating.

EP 1 361 171 B1 discloses a plastic film for packaging parallelepiped objects consisting of polyolefin or polyethylene terephthalate, which is preferably metal-coated on one side; the metal coating, preferably being provided with a printed coating, comprises a pattern-coated, heat-sealable lacquer. The surfaces of the printed coating not comprising the heat-sealable lacquer are provided with a pattern-coated over lacquer.

In general, the pattern-applied over lacquer of prior-art documents serves to obtain an entirely flat surface of a film comprising pattern-applied seal lacquer, so that a completely uniform roll up of said film is possible.

On the other hand, during heat sealing, it not seldom occurs that the print of the packaging film is affected and deteriorated, and even totally loose its distinctive printing quality.

The application of a protective film on the printing coating, whereupon a heat-sealable lacquer is pattern applied affects the flatness of the resulting film.

Usually, the pattern -applied seal lacquer causes an at least partial sticking of the film layers when unwinding the reel comprising them.

Without contesting the associated advantages of the-state-of-the-art systems, it is nevertheless obvious that there is still a need for films comprising a patterned sealing layer, which do not show any problem during the unwinding step of the reel in which they are presented.

In addition, there is a need for packaging films having an entirely flat surface wherein the printing coating, located below the pattern-applied heat-seal lacquer, remains free of deteriorations after heat sealing, said packaging films, supplied as a reel, being unwound without problems, after storage under rather extreme conditions.

### Aim of the Invention

The present invention aims to provide a film comprising a patterned seal layer, said film not showing blocking problems when unwinding the reel comprising it.

It is another aim of the present invention to provide a packaging film for packaging rigid or semi-rigid cubic or parallelepiped-shape blocks that does not present the prior-art limitations.

It is an additional aim of the present invention to provide a packaging film, in particular a packaging film comprising a printing layer, for packaging rigid or semi-rigid cubic or parallelepiped-shape blocks, presenting an entirely flat surface and characterized in that the printing coating, located below the pattern-applied heat-seal lacquer, remains undamaged after heat sealing and upon opening the package.

It is a further goal of the present invention is to provide a packaging film which, when delivered as a reel containing a multitude of individual packaging films, shows negligible adhesion to other individual packaging films, in mutual contact, during storage or transport.

### Summary of the invention

The present invention discloses a storage-stable film intended to be reeled to a plurality of superposed film layers, said film comprising a sealing pattern 4 at the edge of one side perpendicular to the unwinding direction of the reeled film, said sealing pattern having the shape of a continuous or interrupted V-shaped or U-shaped strip, to reduce or avoid blocking while unwinding the reeled film, said film being characterized in that the unwinding force of the reeled film, after storage at 40°C during 48 hours, is at least 10% less compared to the unwinding force of a reeled film wherein the film comprises a continuous straight line-shaped strip sealing pattern, perpendicular to the unwinding direction of the reeled film and covering the same rectilinear distance as the V- or U-shaped strip.

Preferred embodiments of the present invention disclose on or more of the following features:
- the width of the continuous or interrupted V-shaped or U-shaped strip is comprised between 1 and 10 mm, said strip extending over 60 and 100 percent of the width of the film;
- the film comprises an additional sealing pattern 3 at the edge of the sides perpendicular to the side comprising the V- or U-shaped strip sealing pattern 4; seal patterns 3 and 4 having an identical or different composition(s);
- the additional sealing pattern 3 has the form of isolated symmetrical regions selected from the group consisting of V-shaped, U-shaped, partially and completely filled isosceles triangle-shaped, partially and completely filled isosceles trapezoid-shaped, partially and completely filled square-shaped, partially and completely filled rectangle-shaped, partially and completely filled circle-shaped, and partially and completely filled ellipse-shaped regions;
- the sealable patterns 3 and 4 are heat-sealable patterns;
- the film is a multilayer packaging film for rigid or semi-rigid blocks, said film comprising an inner face in contact, in use, with the packed blocks and an outer face comprising a V-shaped or U-shaped strip sealing pattern 4 and an additional sealing pattern 3, said patterns being arranged on a polyolefin based layer 1, the outer face of said polyolefin based layer comprising a printing layer 6 and an external protective layer 2 entirely covering said printing layer 6, said protective layer comprising:
   - a heat-sealable pattern 3 arranged on a first set of parallel folds (a1 to a4);
   - a V- or U-shaped heat-sealable pattern 4 on sides (A) and (B) of said packaging film and covering partly;
      ∘ the first fold (a1) of the first set of parallel folds;
      ∘ a second set of parallel folds (b1, b2) perpendicular to the first set of parallel folds;
- the heat-sealable patterns 3 and 4 not overlapping at the first fold (a1);
- heat-sealable pattern 4 extending over heat-sealable pattern 3 positioned on said first fold (a1);
   wherein the heat seal initiation temperature of heat-sealable patterns 3, 4 is at least 60°C;
- the outside face of the polyolefin-based layer 1 comprises a barrier layer 5;
- the barrier layer 5 is a metallization layer;
- the polyolefin-based layer 1 is an oriented polypropylene layer;
- the polyolefin-based layer 1 at its innerface comprises one or more additional layers;
- the sealing pattern comprises one or more olefin copolymer(s) selected from C2-C8 olefin copolymers comprising copolymerized monomers selected from the group consisting of maleic anhydride, vinyl acetate, vinyl alcohol, (meth)acrylic acid, alkyl (meth)acrylates and mixtures thereof;
- the thickness of the heat-sealable pattern 3 and 4 is smaller than the thickness of the protective layer 2, the heat seal patterns 3,4 being embedded in the protective layer 2 so that the outside surface of said packaging film is completely flat;
- the thickness of the heat-sealable patterns 3, 4 replace between 20 and 80% of the thickness of protective layer 2;
- the thickness of the protective layer 2 is comprised between 2 and 8 µm;
- the bond/peel strength of:
   - patterned heat-sealable layer 3 to patterned heat-sealable lacquer 3 is at least 0.6 N/15mm after heat sealing;
   - patterned heat-sealable layer 4 to the inner face of the multilayer packaging film is at least 0.6 N/15 mm, after heat sealing.

The present invention further discloses the use of the film for packaging of food products in the form of rigid or semi-rigid cubic or parallelepiped-shape blocks.

The present invention further discloses a reel of storage-stable films comprising a multiple of individual films in the width of the reel.

### Brief Description of the Drawings

Fig. 1 represents a reel comprising a film with sealing pattern 4 according to the present invention and a schematic representation of the method for determining the unwinding force.
Fig. 2 represents a reel comprising a film with a straight line shaped sealing pattern 4 (comparative) and a schematic representation of the method for determining the unwinding force.
Fig. 3 represents a top view on the outer face of a reel comprising a plurality of packaging films in accordance with the invention.

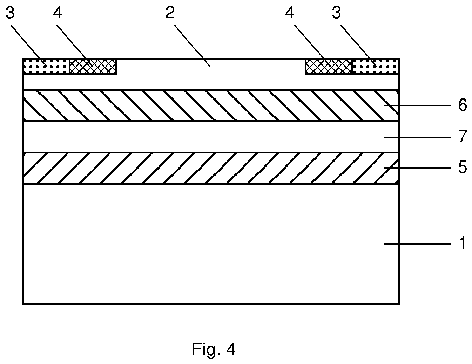

Fig. 4 represents a cross-section of packaging film in accordance with the invention.

### Key

1: polyolefin-based layer
2: external protective layer
3: additional heat-sealable pattern
4: heat-sealable pattern
5: barrier layer
6: printing layer
7: adhering layer
8: unwinding force
I: indication marking the edges of an individual packaging film
a1 to a4: first set of parallel folds
b1, b2: second set of parallel folds
c1, c2: lateral edges of the individual packaging film
A to E: medial surfaces of the individual packaging film

### Detailed Description of the Invention

The present invention relates to a film comprising a patterned seal layer, configured in such a way that a reel comprising a multiple of said films, in the length and optionally in the width of said reel, can be unwound without blocking problems, after storage for at least 48 hours at 40°C.

The present invention relates to a film intended to be reeled, comprising a sealing pattern 4, at the edge of one side, perpendicular to the unwinding direction of the reeled film, the geometry of the sealing pattern 4 being arranged to present a minimized contact surface while unreeling.

In order to minimize the contact surface while unreeling, the sealing pattern 4 has the shape of a continuous or interrupted V-shaped or U-shaped strip, the width of said strip being comprised between 1 and 10 mm, preferably between 1 and 8 mm, more preferably between 1 and 6 mm, most preferably between 1 and 4 mm.

The continuous or interrupted V-shaped or U-shaped strip, present at the edge of one side of the film, extends over 50 and 100 percent, preferably over 60 and 100 percent, more preferably over 70 and 100 percent, most preferably over 80 and 100 percent and even over 90 and 100 percent of the width of the edge of said one side of the film and is preferably centrally located.

The patterned sealing layer 4 has a film thickness comprised between 0.5 and 8 µm, preferably comprised between 1 and 6 µm, more preferably comprised between 2 and 4 µm.

The patterned seal layer 4 preferably comprises one or more polymers selected from the group consisting of polyesters, polyurethanes, polyacrylics, styrene (co)polymers, styrene block copolymers and modified C2-C8 polyolefin (co)polymers.

The expression "modified C2-C8 polyolefin (co)polymer" has to be understood as C2-C8 polyolefin (co)polymer modified with functional groups preferably obtained from the incorporation of one or more components selected from the group consisting of maleic anhydride, vinylacetate, vinylalcohol, acrylic acid, methacrylic acid, itaconic acid, alkyl acrylate, alkyl methacrylate and mixtures thereof.

The modified C2-C8 polyolefin (co)polymer is preferably maleic anhydride modified C2-C8 polyolefin (co)polymer.

Preferably, the patterned seal layer 4 comprises maleic anhydride modified polyethylene or maleic anhydride modified polypropylene. More preferably, the patterned seal layer comprises a preponderant amount of maleic anhydride modified polyethylene or maleic anhydride modified polypropylene, or is a maleic anhydride modified polyethylene or maleic anhydride modified polypropylene layer.

The patterned seal layer is preferably a heat seal layer characterized by a heat-seal initiation temperature of at least 60°C, preferably at least 70°C, more preferably at least 80°C, most preferably at least 90°C.

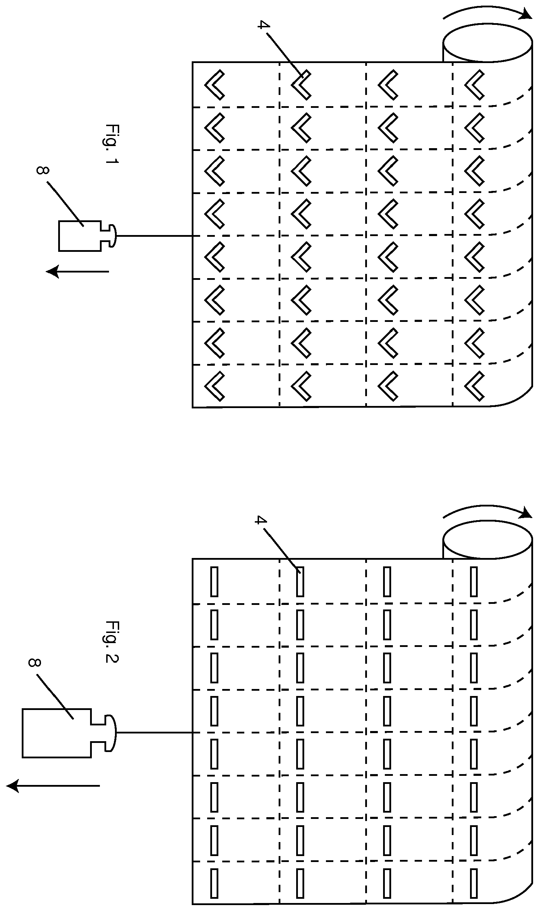

The inventors have observed that substituting the sealing pattern 4 of the present invention by an interrupted or continuous straight line shaped strip of the same width and thickness and covering the same rectilinear distance, results in an increased force needed to unwind a reel comprising the respective films (Fig. 1 and Fig. 2).

The inventors have observed that changing from a generally-applied interrupted or continuous straight line shaped strip to an interrupted or continuous V-shaped or U-shaped strip results in a reduction of unwinding force of the reeled film of at least 10%, preferably at least 15%, more preferably at least 20%, most preferably at least 25%, for a reel being stored at a temperature of 40°C for a period of at least 48 hours.

In the present invention, by "unwinding force" it is meant the weight fixed in the middle of the end of the reeled film that meets to unwind the reel automatically.

Even when the unwinding force depends on the width and the thickness of the reel and the cumulative rectilinear distance of the seal strip over the width of the reel perpendicular to the unwinding direction, the inventors have observed that for identical reels, there is a reduction is at least 10% when going from a straight line sealing pattern to a V- or U-shaped sealing pattern 4.

According to the present invention, the film preferably comprises an additional sealing pattern 3 having the shape of isolated symmetrical regions selected from the group consisting of V-shaped, U-shaped, partially and completely filled isosceles triangle-shaped, partially and completely filled isosceles trapezoid-shaped, partially and completely filled square-shaped, partially and completely filled rectangle-shaped, partially and completely filled circle-shaped, and partially and completely filled ellipse-shaped regions.

The additional sealing pattern 3 is preferably located at the edge of at least one side, perpendicular to the side comprising the sealing pattern 4.

Depending of the end application of the film, the formulation composition of the sealing pattern 3 and 4 as well as their heat-seal initiation temperature may be identical or different.

The film comprising the sealing pattern 4 and optionally the sealing pattern 3 preferably is a multilayer film, used as a packaging film.

In an embodiment, the film is a packaging film preferably for packaging rigid or semi-rigid cubic or parallelepiped- shaped blocks, said film being characterized by an entirely flat outer and inner face and being completely free of printing damage after heat sealing and upon opening the package.

The multilayer packaging film of the present invention comprises a base layer 1, comprising an inner and an outerface, the innerface in contact, in use, with the packed blocks, the outerface comprising a printing layer 6 and a protective layer 2, the protecting layer completely covering said printing layer. On top of the protective layer 2 two non-overlapping heat-sealable patterned layers 3, 4 are provided, said non-overlapping patterned layers being embedded in protective layer 2, replacing part of the protective layer thickness at such an extent that the outer face of said multilayer packaging film is completely flat, while there is still protective layer present between the printing layer 6 and the heat-sealable lacquer patterns 3 and 4.

The base layer 1 is a polyester, polyamide, polyolefin or cellophane film.

Preferably, the base layer 1 is a polyethylene or a polypropylene film, more preferably an oriented polyethylene or oriented polypropylene film, most preferably a biaxially oriented polypropylene film.

The thickness of the base layer 1 is comprised between 10 and 100 µm, preferably between 20 and 50 µm, and more preferably between 25 and 35 µm.

The inner face of the base layer 1 further may comprise one or more additional layers applied on the inner side of the base layer 1, said additional layers preferably being selected from the group consisting of polyethylene terephthalate, polyethylene naphthalate, polypropylene, polyethylene, copolymers of ethylene and propylene, copolymers of ethylene and butylene, copolymers of ethylene, propylene and butylene, terpolymers of ethylene and propylene and butylene, polyamide (Nylon 6, Nylon 66), polylactic acid, poly(ethylene-co-vinyl alcohol), polystyrene and mixtures thereof.

The outer face of the base layer 1 preferably comprises a barrier layer 5 providing impermeability to gasses as well as to aromas and, in particular prevents oxygen from penetrating the contents of the package prepared of said substrates.

The barrier layer 5 preferably is a metallized layer selected from the group consisting of aluminum oxide, silicium oxide, magnesium oxide, cerium oxide, hafnium oxide, tantalum oxide, titanium oxide, yttrium oxide, zirconium oxide and mixtures thereof.

More preferably, the barrier layer 5 is a silicon oxide (SiOx) or an aluminum oxide (AlOx) layer.

The barrier layer 5 may be created by physical and/or chemical vapor deposition, plasma-enhanced chemical vapor deposition or plasma polymerization.

The barrier layer 5 preferably is applied by electron-beam vacuum deposition at a pressure lower than 10⁻³ mbar with an applied voltage of 5 to 40 kV;

The thickness of the barrier layer 5 is comprised between 10 and 200 nm, preferably between 20 and 100 nm, and more preferably between 30 and 80 nm.

The outer face of the base layer 1 is preferably treated (e.g., corona-discharge treatment, plasma-discharge treatment and other discharge treatments, acid treatment, flame treatment) before the application of the metallized layer 5.

The outer face of base layer 1 or the outer face of barrier layer 5, if present, comprises a printed layer 6.

The printing layer 6 is obtained from conventional printing technologies such as heliogravure, rotogravure and flexographic printing, but also new technologies such as ink-jet printing and liquid electrography.

The ink compositions for being used in the present invention are dryable and/or curable and are solvent-containing, water-based or solvent-less inks comprising one or more polymer(s) and/or oligomers selected from the group consisting of polyolefins, poly(meth)acrylics, styrene- (meth)acrylic copolymers, polyesters, polyamides, polyvinyl chloride, latex, polycarbonates, polyurethanes, polyethers, alkyd resins, rosin resins, maleic resins, hydrocarbon resins, nitrocellulose, polyvinyl butyral, and mixtures thereof; and one or more dyes and/or pigments.

By "curable ink composition", the present invention means cross-linking under the influence of heat or under the influence of actinic radiation.

By "heat", the present invention means temperatures above 20°C.

Dryable ink compositions are dried at room temperature or higher.

The multilayer packaging film preferably comprises an adhering layer (7) between the barrier layer (5) and the printing layer (6), said adhering layer being selected from the group consisting of adhesive layers and tie layers, wherein:
- the adhesive layers comprise one or more (co)polymers selected from the group consisting of polyurethane(s) and (co)polymers comprising (co)polymerized C1-C20 alkyl (meth)acrylates;
- the tie layers comprise one or more olefin copolymer(s) selected from C2-C8 olefin copolymers comprising copolymerized monomers selected from the group consisting of maleic anhydride, vinyl acetate, vinyl alcohol, (meth)acrylic acid, alkyl (meth)acrylates and mixtures thereof.

On top of printing layer 5, protective layer 2 is provided over the entire surface of the film according to a pattern of varying thickness, said pattern corresponding complementary to both the thickness of heat-sealable patterned layers 3 and 4, in such a way that the overall surface of the multilayer packaging film is completely flat.

The protective layer 2 according to the present invention is obtained from a lacquer selected from the group consisting of radiation-curable lacquers, water-based lacquers and organic solvent-based lacquers comprising resin structures selected from the group consisting of polyamide, polyester, polyolefin, poly(meth)acrylate, nitrocellulose and copolymers thereof.

The thickness of the protective layer 2 is comprised between 1 and 10 µm, preferably between 1 and 8 µm, more preferably between 2 and 6 µm and most preferably between 2 and 4 µm.

Preferably, patterned heat-sealable layers 3, 4 comprise one or more olefin copolymer(s) selected from C2-C8 olefin copolymers, optionally comprising copolymerized monomers selected from the group consisting of maleic anhydride, vinyl acetate, vinyl alcohol, (meth)acrylic acid, alkyl (meth)acrylates and mixtures thereof.

The composition of the heat-sealable layer determines its heat-seal initiation temperature as well as the mutual bond/peel strength for patterned heat-sealable layer 3, and the bond/peel strength with respect to the inner face of the polyolefin base layer 1 for patterned heat-sealable layer 4.

In the present invention, two not-overlapping patterned heat seal layers 3, 4 are selected in such a way that:
- their heat-seal initiation temperature is at least 60°C, preferably at least 65°C, more preferably at least 70°C, most preferably at least 75°C or even at least 80°C;
- patterned heat-seal layer 4 guarantees sufficient adhesion to the inner face of the multilayer packaging film;
- patterned heat-seal layers 3 assure sufficient mutual adhesion;
- no or negligible adhesion is observed between different packaging films, produced as reels, during transportation and unwinding of said rolls.

By "sufficient adhesion", the present invention means a bond/peel strength of at least 0.6 N/15 mm, preferably of at least 0.8, more preferably of at least 1 N/15 mm, according to ASTM F904-1998 (reapproved 2008). By "negligible adhesion", the present invention means less than 0.1 N/15 mm, preferably of less than 0.08, more preferably of less than 0.06, most preferably of less than 0.04 N/15 mm, according to ASTM F904-1998 (reapproved 2008).

According to the invention, the multilayer packaging film is folded according to parallel lines perpendicular to the opposite sides c1 and c2, thus creating parallel folds a1 to a4 and adjacent zones A to E, wherein zones B to D have an identical surface, while the surface of zone A is comprised between 30 and 70%, preferably between 40 and 60% of the surface of each of the zones B to D, and wherein the surface of zone E is comprised between 70 and 100%, preferably between 80 and 90% of the surface of each of the zones B to D.

Similarly, the multilayer packaging film is folded according to parallel lines, parallel to opposite sides c1 and c2, thus creating folds b1 and b2, dividing each of zones A to E into three parts, wherein the surface of the parts adjacent to opposite sides c1 and c2 are identical and are between 50 and 70 %, preferably between 55 and 65% of the surface of the central part, the central part for zones B to D preferably being a square.

The protective layer 2, completely covering the printing layer 5, is pattern-applied in such a way that its overall thickness is identical and comprised between 1 and 8 µm, except for:
- triangle-shaped regions situated on folds a2 to a4 in the parts of zones B to E, adjacent to opposite sides c1 and c2;
- trapezoid-shaped regions situated on folds a1 in the parts of zones A and B, adjacent to opposite sides c1 and c2;
- a strip-shaped region located in the three parts of zone A near the outer side of zone A, continuing over fold a1, near opposite sides c1 and c2, extending beyond and interrupted by the trapezoid shaped regions on a1 and ending in the parts of zone B, adjacent to opposite sides c1 and c2;
where the thickness of the protective layer 2 is 20 to 80% of the thickness outside these regions.

Preferably, the triangle-shaped regions have the form of an isosceles triangle with the vertex angle, comprised between 10 and 150°, preferable between 30 and 130°, more preferably between 50 and 110°, even between 70 and 90°, even between 80 and 100°, or even between 85 and 95°, situated on folds a2 to a4 and the base, with a length comprised between 50 and 95%, preferably between 60 and 90%, more preferably 70 and 85% of the width of zones B to D, being parallel to opposite sides c1 and c2 and extending over zones B to E.

Preferably, the trapezoid-shaped regions have the form of an isosceles trapezoid, preferably derived from the isosceles triangles, situated on folds a2 to a4. The isosceles trapezoids are situated on fold a1, said fold dividing the base of the trapezoid in two identical parts, the longest base being parallel to opposite sides c1 and c2, the height being comprised between 20 and 50%, preferably between 25 and 45%, more preferably between 30 and 40% of the height of the isosceles triangles, situated on a2 to a4; the isosceles trapezoids extend over zones A and B.

The width of the strip-shaped heat-sealable region 4 is comprised between 20 and 50%, preferably between 25 and 45%, more preferably between 30 and 40% of the height of the isosceles triangles, situated on a2 to a4. The strip-shaped region preferably is V-shaped with the point of the "V" directed towards the inside of the central part of zone A the point being characterized in that the angle is comprised between 175 and 130°, preferably between 170 and 140°, more preferably between 165 and 150°.

The triangle- and trapezoid-shaped regions are pattern-filled with heat-sealable pattern 3, while the strip-shaped region is pattern-filled with heat-sealable pattern 4 in such a way that the total height of protective layer 2 and first and second heat-sealable pattern 3, 4 is identical to the height of the protective layer 2 outside the patterns. The outer face of the multilayer packaging film thus is substantially completely flat over its whole surface, allowing the packaging film, in its production step, to roll up evenly.

By "substantially completely flat", the present invention means that the variation of the thickness of the outer face of the multilayer packaging film is less than 5%, preferably less than 4% more preferably less than 3%, most preferably less than 2% or even less than 1%.

The multilayer packaging film is produced as a reel product, including a plurality of adjacent individual multilayer packaging films, in the length and width of said reel, each individual film being provided with one or more identification mark(s) defining the individual packaging film.

The shape and dimensions of the heat-sealable patterns 3, 4 are selected in such a way that a negligible adhesion is assured during unwinding of said reel in the packaging process.

In the packaging process, the packaging film is unwound from the reel and cut into individual packaging foil sheets. The foil sheets, forming the packaging material for each one of semi-rigid cubic or parallelepiped- shaped block, are folded in a special device, over folds a1 to a4 and b1 to b2, against the side surfaces of the block. Two identical parts of heat-seal region 3 on folds a1 to a4, substantially completely overlap and are heat sealed, said identical parts being obtained by folding over a1 to a4 and are each other's mirror image. Then, the central part of zone E is folded over central part of zone A and are fixed to each other through heat seal region 4.

Heat-sealing the heat-seal regions 3,4 does not deteriorate the printing layer 6. Print quality, before and after heat sealing, at the location of heat-sealable patterns 3, 4 is exactly the same.

Print quality before heat sealing and after opening the heat-sealed package are exactly the same.

The outer surface of the multilayer packaging film is substantially completely flat and assures an evenly roll up of the film during their production.

### Example

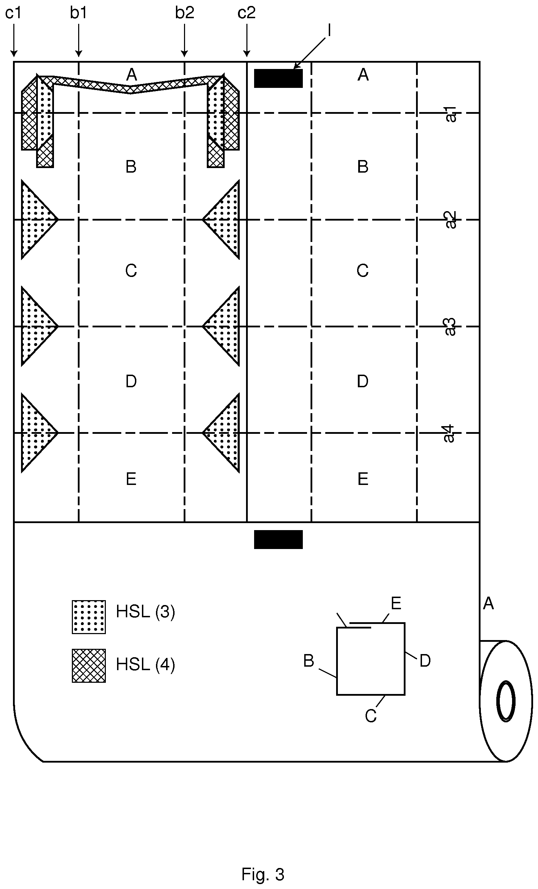

A reel of 1500 meters containing two individual films adjacent in its width, said individual films each comprising heat-sealing patterns 3 and 4, as illustrated in Figure 1 and Fig. 3, is stored during 1 week at 45°C. Each individual film has a width of 45 mm and a length of 90 mm.

The multilayer film comprises a pearlised oriented polypropylene layer as base layer with a thickness of 38 µm, a metalized barrier layer with a thickness of 70 nm, a nitrocellulose-type printing ink and a nitrocellulose-type protective layer with a thickness of 4 µm.Heat-sealing patterns 3 and 4 are based on maleic anhydride modified polyethylene with a heat-seal initiation temperature of about 75°C. The sealing patterns are embedded in the protective layer and have a thickness which is 70% of the thickness of the protective layer. Heat-sealing pattern 4 is V-shaped having a width of 2 mm and a rectilinear length which is 85% of the width of the film, with a "V"-angle of 160°; heat sealing pattern 3 comprises isosceles triangles with base of 15 mm and height of 8 mm (see Fig. 3).

The reel is automatically unwound using a weight of 50 g, fixed in the middle of the end of the reeled film, contrary to a reel comprising identical films wherein the V-shaped sealing pattern 4 is replaced by a straight line shaped strip with the same rectilinear length, width and thickness as the V-shaped strip.

For the reel comprising the films with a straight line shaped sealing pattern 4, the weight to unwind the reel automatically is 75 g, i.e. 50% more than for the reel comprising the V-shaped sealing pattern 4.

Semi-rigid cubic blocks with a side of 15 mm are packed using the individual films which are heat-sealed at a temperature of 100°C

After heat sealing, the print at the heat-seal locations is unchanged. Opening the sealed package standing at room temperature for 60 days does not damage the print at the heat seal locations.

## Claims

1. Storage-stable film intended to be reeled to a plurality of superposed film layers, said film comprising a sealing pattern (4), at the edge of one side, perpendicular to the unwinding direction of the reeled film, said sealing pattern having the shape of a continuous or interrupted V-shaped or U-shaped strip, to reduce or avoid blocking while unwinding the reeled film, said film being **characterized in that** the unwinding force of the reeled film, after storage at 40°C during 48 hours, is at least 10% less compared to the unwinding force of a reeled film wherein the film comprises a continuous straight line-shaped strip sealing pattern, perpendicular to the unwinding direction of the reeled film and covering the same rectilinear distance as the V- or U-shaped strip.

2. Storage-stable film according to Claim 1, wherein the width of the continuous or interrupted V-shaped or U-shaped strip sealing pattern (4) is comprised between 1 and 10 mm, said strip extending over 60 and 100 percent of the width of the film.

3. The storage-stable film according to Claim 1 or 2, comprising an additional sealing pattern (3) at the edge of the sides perpendicular to the side comprising the V- or U-shaped strip sealing pattern (4).

4. The storage-stable film according to any of Claims 1 to 3, wherein the additional sealing pattern (3) has the form of isolated symmetrical regions selected from the group consisting of V-shaped, U-shaped, partially and completely filled isosceles triangle-shaped, partially and completely filled isosceles trapezoid-shaped, partially and completely filled square-shaped, partially and completely filled rectangle-shaped, partially and completely filled circle-shaped, and partially and completely filled ellipse-shaped regions.

5. The storage-stable film according to any of Claims 1 to 4, wherein the sealable patterns (3) and (4) are heat-sealable patterns.

6. The storage-stable film according to any of Claims 1 to 5 being a multilayer packaging film for rigid or semi-rigid blocks, said film comprising an inner face in contact, in use, with the packed blocks and an outer face comprising a V-shaped or U-shaped strip sealing pattern (4) and an additional sealing pattern (3), said patterns being arranged on a polyolefin-based layer (1), the outer face of said polyolefin-based layer comprising a printing layer (6) and an external protective layer (2) entirely covering said printing layer (6), said protective layer comprising:
- a heat-sealable pattern (3) arranged on a first set of parallel folds (a1 to a4);
- a V- or U-shaped heat-sealable pattern (4) on sides (A) and (B) of said packaging film and covering partly;
• the first fold (a1) of the first set of parallel folds;
• a second set of parallel folds (b1, b2) perpendicular to the first set of parallel folds;
- the heat-sealable patterns (3) and (4) not overlapping at the first fold (a1);
- heat-sealable pattern (4) extending over heat-sealable pattern (3) positioned on said first fold (a1);
wherein the heat seal initiation temperature of heat-sealable patterns (3, 4) being at least 60°C.

7. The storage-stable film according to any of Claims 1 to 6, wherein the outside face of the polyolefin-based layer (1) comprises a barrier layer (5).

8. The storage-stable film according to any of Claims 1 to 7, wherein the barrier layer (5) is a metallization layer.

9. The storage-stable multilayer packaging film according to any of Claims 1 to 8, wherein the polyolefin based layer (1) is an oriented polypropylene layer.

10. The storage-stable multilayer packaging film according to any of Claims 1 to 9, wherein the polyolefin-based layer (1) at its inner face comprises one or more additional layers.

11. The storage-stable film according to any of Claims 1 to 10, wherein the sealing pattern comprises one or more olefin copolymer(s) selected from C2-C8 olefin copolymers comprising copolymerized monomers selected from the group consisting of maleic anhydride, vinyl acetate, vinyl alcohol, (meth)acrylic acid, alkyl (meth)acrylates and mixtures thereof.

12. The storage-stable film according to any of Claims 1 to 11, wherein the thickness of the heat-sealable pattern (3) and (4) is smaller than the thickness of the protective layer (2), the heat-seal patterns (3,4) being embedded in the protective layer (2) so that the outside surface of said packaging film is completely flat.

13. The storage-stable film according to any of Claims 1 to 12, wherein the thickness of the heat-sealable patterns (3, 4) replace between 20 and 80% of the thickness of protective layer (2).

14. The storage-stable film according to any of Claims 1 to 13, wherein the thickness of the protective layer (2) is comprised between 2 and 8 µm.

15. The storage-stable film according to any of Claims 1 to 14, wherein the bond/peel strength of:
- patterned heat-sealable layer (3) to patterned heat-sealable lacquer (3) is at least 0.6 N/15mm after heat sealing;
- patterned heat-sealable layer (4) to the inner face of the multilayer packaging film is at least 0.6 N/15 mm, after heat sealing.

16. Use of the film according to any of Claims 1 to 15 for packaging food products in the form of rigid or semi-rigid cubic or parallelepiped- shaped blocks.

17. Reel of storage-stable films according to any of the preceding Claims 1 to 15 comprising a multiple of individual films in the width of the reel.
